# EUROPEAN PATENT APPLICATION

(11) **EP 4 742 342 A1**
(43) Date of publication of application: **13.05.2026**
(21) Application number: 25203561.3
(22) Date of filing: 22.09.2025
(51) Int. Cl.: H01M 10/04, H01M 10/0585, H01M 50/109, H01M 50/14, H01M 50/153, H01M 50/174, H01M 50/528, H01M 50/559, H01M 50/586, H01M 50/593, H01M 50/474

(54) **SECONDARY BATTERY**

(30) Priority: 11.11.2024 KR 20240158809
(71) Applicant: SAMSUNG SDI CO., LTD., Yongin-si, Gyeonggi-do 17084 (KR)
(72) Inventor: Jang, Taewoong, 17084 Yongin-si, Gyeonggi-do (KR)
(74) Representative: Meissner Bolte Partnerschaft mbB

(57) **Abstract**

A secondary battery (1) includes an electrode assembly (100) including an electrode laminate (140) having a circular shape where a first electrode (110), a separator, and a second electrode (120) are alternately stacked, a first electrode tab (113) connected to the first electrode (110), and a second electrode tab (123) connected to the second electrode (120), an accommodating can (300) with one open side for accommodating the electrode assembly (100), the accommodating can (300) being electrically connected to the first electrode tab (113), a cap assembly (400) configured to seal the one open side of the accommodating can (300), the cap assembly (400) being electrically connected to the second electrode tab (123), a first contact member (210) between one surface of the electrode laminate (140) that faces a bottom surface of the accommodating can (300) and the first electrode tab (113), and a first fixing member (230) surrounding the first electrode tab (113) between an inner side wall of the accommodating can (300) and an outer circumferential surface of the electrode assembly (100).

## Description

### BACKGROUND

### 1. Field

The present invention relates to a secondary battery.

### 2. Description of Related Art

Recently, the growing demand for wearable devices such as Bluetooth-enabled headphones, earphones, smart watches, and body-worn medical devices has increased the demand for ultra-small secondary batteries having a high energy density and a sufficiently small size. Such secondary batteries are significantly smaller in height than width, depending on the nature of applications, and may be referred to as coin batteries and button batteries.

A secondary battery includes an electrode assembly including a positive electrode and a negative electrode, an accommodating can for accommodating the electrode assembly, an electrode terminal connected to the electrode assembly, etc. The electrode assembly has a winding type or a stack type to be accommodated in a can.

The above information disclosed in this background section is for enhancement of understanding of the background of the present invention, and therefore, it may contain information that does not constitute related (or prior) art.

### SUMMARY OF THE INVENTION

The invention concerns a secondary battery, including an electrode assembly including an electrode laminate having a circular shape where a first electrode, a separator, and a second electrode are alternately stacked, a first electrode tab connected to the first electrode, and a second electrode tab connected to the second electrode, an accommodating can with one open side for accommodating the electrode assembly, the accommodating can being electrically connected to the first electrode tab, a cap assembly configured to seal the one open side of the accommodating can, the cap assembly being electrically connected to the second electrode tab, a first contact member between one surface of the electrode laminate that faces a bottom surface of the accommodating can and the first electrode tab, and a first fixing member surrounding the first electrode tab between an inner side wall of the accommodating can and an outer circumferential surface of the electrode assembly.

The first fixing member may include a first surface contacting the first electrode tab, and a second surface contacting the accommodating can, wherein a width of the first surface may be greater than a width of the second surface along a circumference of the electrode assembly.

A cross-section of the first fixing member perpendicular to a stacking direction of the electrode laminate may have an arc shape.

A cross-section of the first fixing member perpendicular to a stacking direction of the electrode laminate may have a trapezoidal shape.

A cross-section of the first fixing member perpendicular to a stacking direction of the electrode laminate may have a step shape between the first surface and the second surface.

The first fixing member may be bonded to the first electrode tab by an adhesive coated on the first surface.

The secondary battery may further include a second fixing member surrounding the second electrode tab between an inner side wall of the accommodating can and an outer circumferential surface of the electrode assembly.

The second fixing member may include a first surface contacting the second electrode tab, and a second surface contacting the accommodating can, wherein a width of the first surface may be greater than a width of the second surface along a circumference of the electrode assembly.

A cross-section of the second fixing member perpendicular to a stacking direction of the electrode laminate may have an arc shape.

A cross-section of the second fixing member perpendicular to a stacking direction of the electrode laminate may have a trapezoidal shape.

A cross-section of the second fixing member perpendicular to a stacking direction of the electrode laminate may have a step shape between the first surface and the second surface.

At least one of the first fixing member and the second fixing member may include an insulating material including at least one of Polypropylene, Polyimide, and Polyethylene terephthalate.

At least one of the first fixing member and the second fixing member may include a porous insulating material.

The first electrode may include a first coating part on an inner side of a predetermined first arc on an outer circumference of a circular substrate, the first coating part being coated with a first active material, and a first non-coated part on an outer side of the predetermined first arc not coated with the first active material, and wherein the second electrode includes a second coating part on an inner side of a predetermined second arc on an outer circumference of a circular substrate, the second electrode being coated with a second active material, and a second non-coated part on an outer side of the predetermined second arc not coated with the second active material.

The first electrode tab may be adhered to a bottom surface of the accommodating can by a pressure from the electrode laminate in response to the cap assembly being coupled to the accommodating can.

The secondary battery may further include a second contact member between another surface of the electrode laminate facing the second electrode tab and a bottom surface of the cap assembly.

The second electrode tab is adhered to the bottom surface of the cap assembly by a pressure from the electrode laminate in response to the cap assembly being coupled to the accommodating can.

The cap assembly may include a terminal plate connected to the second electrode tab, a cap plate including a first opening, the cap plate being coupled to the one open side of the accommodating can, and a cap insulating layer including a second opening, the cap insulating layer being between the terminal plate and the cap plate for insulation.

The terminal plate may include a body connected to the second electrode tab, and a protrusion protruding upward from a center of the body, the protrusion penetrating the first opening and the second opening, wherein a diameter of the body may be greater than a diameter of an outer circumferential surface of the electrode laminate.

Embodiments include a method of manufacturing a secondary battery, the method including forming an electrode assembly including an electrode laminate having a circular shape where a first electrode, a separator, and a second electrode are alternately stacked, a first electrode tab connected to the first electrode, and a second electrode tab connected to the second electrode, arranging a first contact member on the electrode laminate and bending and placing the first electrode tab on the first contact member, arranging a first fixing member surrounding the first electrode tab on an outer circumferential surface of the electrode assembly, accommodating the electrode assembly in an accommodating can with one open side, and connecting the first electrode tab to the accommodating can by coupling the cap assembly to the one open side of the accommodating can.

However, the technical problem to be solved by the present invention is not limited to the above problem, and other problems not mentioned herein, and aspects and features of the present invention that would address such problems, will be clearly understood by those skilled in the art from the description of the present invention below.

According to the present invention to solve the above technical problem, a secondary battery includes an electrode assembly including an electrode laminate in a circular shape where a first electrode, a separator, and a second electrode are alternately stacked, a first electrode tab connected to the first electrode, and a second electrode tab connected to the second electrode, an accommodating can with one open side for accommodating the electrode assembly and electrically connected to the first electrode tab, a cap assembly configured to seal the one open side of the accommodating can and electrically connected to the second electrode tab, a first contact member placed between one surface of the electrode laminate that faces a bottom surface of the accommodating can and the first electrode tab, and a first fixing member placed to surround the first electrode tab between an inner side wall of the accommodating can and an outer circumferential surface of the electrode assembly.

According to one or more embodiments, the first fixing member may include a first surface contacting the first electrode tab, and a second surface contacting the accommodating can. A width of the first surface may be greater than a width of the second surface along a circumferential direction of the electrode assembly.

According to one or more embodiments, a cross-section of the first fixing member perpendicular to a stacking direction of the electrode laminate may have an arc shape.

According to one or more embodiments, a cross-section of the first fixing member perpendicular to a stacking direction of the electrode laminate may have a trapezoidal shape.

According to one or more embodiments, a cross-section of the first fixing member perpendicular to a stacking direction of the electrode laminate may have a step shape between the first surface and the second surface.

According to one or more embodiments, the first fixing member may be bonded to the first electrode tab by an adhesive coated on the first surface.

According to one or more embodiments, the secondary battery may further include a second fixing member placed to surround the second electrode tab between an inner side wall of the accommodating can and an outer circumferential surface of the electrode assembly.

According to one or more embodiments, the second fixing member may include a first surface contacting the second electrode tab, and a second surface contacting the accommodating can. A width of the first surface may be greater than a width of the second surface along a circumferential direction of the electrode assembly.

According to one or more embodiments, a cross-section of the second fixing member perpendicular to a stacking direction of the electrode laminate may have an arc shape.

According to one or more embodiments, a cross-section of the second fixing member perpendicular to a stacking direction of the electrode laminate may have a trapezoidal shape.

According to one or more embodiments, a cross-section of the second fixing member perpendicular to a stacking direction of the electrode laminate may have a step shape between the first surface and the second surface.

According to one or more embodiments, at least one of the first fixing member and the second fixing member may include an insulating material including at least one of Polypropylene (PP), Polyimide (PI), or Polyethylene terephthalate (PET).

According to one or more embodiments, at least one of the first fixing member and the second fixing member may include a porous insulating material.

According to one or more embodiments, the first electrode may include a first coating part placed on an inner side of a predetermined first arc on an outer circumference of a circular substrate and coated with a first active material, and a first non-coated part placed on an outer side of the predetermined first arc without being coated with the first active material. The second electrode may include a second coating part placed on an inner side of a predetermined second arc on an outer circumference of a circular substrate and coated with a second active material, and a second non-coated part placed on an outer side of the predetermined second arc without being coated with the second active material.

According to one or more embodiments, the first electrode tab may be closely adhered to a bottom surface of the accommodating can by a pressure transmitted from the electrode laminate in response to the cap assembly being coupled to the accommodating can.

According to one or more embodiments, the secondary battery may further include a second contact member placed between the other surface of the electrode laminate that faces a bottom surface of the cap assembly and the second electrode tab.

According to one or more embodiments, the second electrode tab may be closely adhered to the bottom surface of the cap assembly by a pressure transmitted from the electrode laminate in response to the cap assembly being coupled to the accommodating can.

According to one or more embodiments, the cap assembly may include a terminal plate connected to the second electrode tab, a cap plate including a first opening and coupled to the one open side of the accommodating can, and a cap insulating layer including a second opening and placed between the terminal plate and the cap plate for insulation.

According to one or more embodiments, the terminal plate may include a body connected to the second electrode tab, and a protrusion that protrudes upward from a center of the body and penetrates the first opening and the second opening. A diameter of the body may be greater than a diameter of an outer circumferential surface of the electrode laminate.

According to one or more embodiments of the present invention, a manufacturing method of a secondary battery may include forming an electrode assembly including an electrode laminate in a circular shape where a first electrode, a separator, and a second electrode are alternately stacked, a first electrode tab connected to the first electrode, and a second electrode tab connected to the second electrode, arranging a first contact member on the electrode laminate and bending and placing the first electrode tab on the first contact member, arranging a first fixing member that surrounds the first electrode tab on an outer circumferential surface of the electrode assembly, accommodating the electrode assembly in an accommodating can with one open side, and connecting the first electrode tab to the accommodating can by coupling a cap assembly to the one open side of the accommodating can.

However, aspects and features of the present invention are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 is a perspective view illustrating a secondary battery according to embodiments of the present invention;
FIG. 2 is an exploded view illustrating a secondary battery according to embodiments;
FIG. 3 is a view illustrating a cross-section of FIG. 1 taken along line A-A;
FIG. 4 is a view illustrating an electrode assembly accommodated in an accommodating can viewed from above as a comparative example;
FIG. 5 is a view illustrating an electrode assembly accommodated in an accommodating can viewed from above according to embodiments of the present invention;
FIG. 6 to FIG. 9 are views illustrating a first fixing member according to various embodiments of the present invention;
FIG. 10 is a view illustrating an example of an electrode assembly according to embodiments of the present invention;
FIG. 11 is an exploded view illustrating an electrode assembly in area B of FIG. 10 viewed from above;
FIG. 12 is a view illustrating an example of a first electrode plate and a second electrode plate according to embodiments of the present invention;
FIG. 13 is a view illustrating that a first contact member, a second contact member, a first fixing member and a second fixing member are placed on an electrode assembly;
FIG. 14 is a cross-sectional view illustrating a terminal plate according to embodiments of the present invention;
FIG. 15 is an exploded perspective view illustrating a cap assembly according to embodiments of the present invention;
FIG. 16 is a view illustrating a connection relationship between a cap assembly and an electrode assembly;
FIG. 17 is a view illustrating a connection relationship between an electrode assembly and an accommodating can according to embodiments of the present invention;
   and
FIG. 18 is a flowchart illustrated to explain a manufacturing method of a secondary battery according to embodiments of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

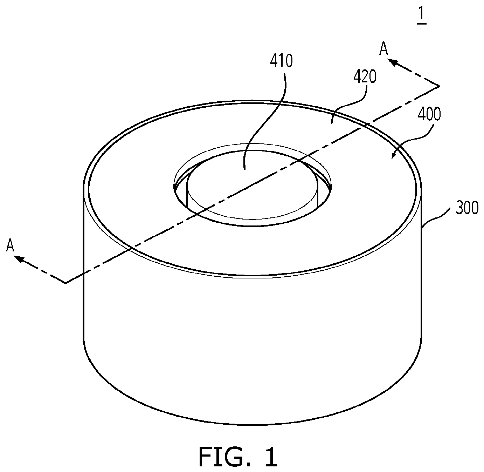

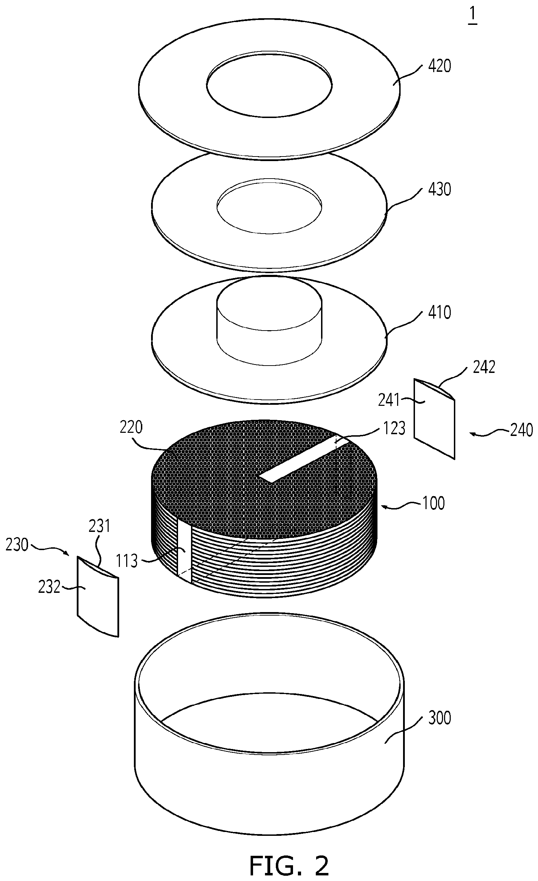

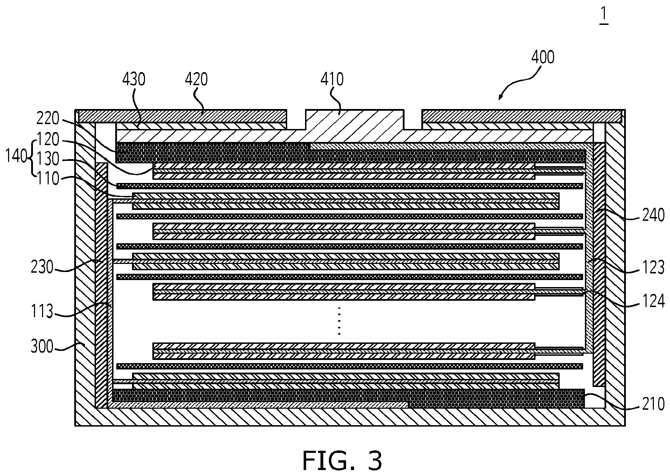

FIG. 1 is a perspective view illustrating a secondary battery according to embodiments of the present invention. FIG. 2 is an exploded view illustrating a secondary battery according to embodiments, and FIG. 3 is a view illustrating a cross-section of FIG. 1 taken along line A-A.

Referring to FIG. 1 to FIG. 3, a secondary battery 1 according to embodiments of the present invention includes an electrode assembly 100, a first contact member 210, a second contact member 220, a first fixing member 230, a second fixing member 240, an accommodating can 300, and a cap assembly 400.

A secondary battery 1 according to one or more embodiments is a micro-sized secondary battery and may be a coin cell or a button cell but is not limited thereto and may be a cylindrical or pin-type battery.

The coin cell or button cell is a battery in the form of a thin coin or button and may refer to a battery having a ratio of height to diameter (height/diameter) of 1 or less but is not limited thereto. Because the coin cell or button cell is generally cylindrical, the cross section in the horizontal direction is generally circular. However, the cross section in the horizontal direction is not limited thereto and may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

According to the invention, the electrode assembly 100 includes an electrode laminate 140 formed by stacking a first electrode 110, a separator 130, and a second electrode 120 in a circular shape, a first electrode tab 113 connected to the first electrode 110, and a second electrode tab 123 connected to the second electrode 120. The electrode laminate 140 may have a laminated structure where a plurality of first electrodes 110, a separator 130, and a second electrode 120 are alternately stacked. The first electrode 110 may be a negative electrode, and the second electrode 120 may be a positive electrode. Also, the first electrode 110 may be a positive electrode, and the second electrode 120 may be a negative electrode.

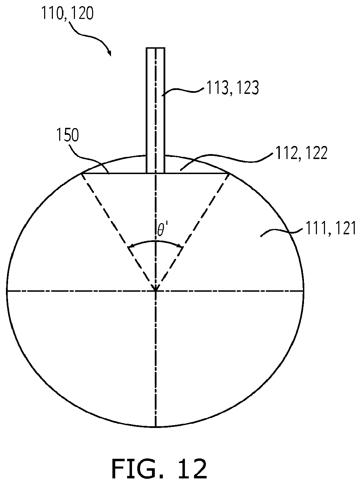

The first electrode 110 may include, on both surfaces of a first substrate formed of a circular thin metal plate, a first coating part 111 (refer to FIG. 12) coated with a first active material and a first non-coated part 112 (refer to FIG. 12) that exposes the substrate without the first active material. The first coating part 111 may be formed by applying a first active material such as graphite or carbon to a circular collector plate formed of a metal foil such as copper, a copper alloy, nickel, or a nickel alloy. The first non-coated part 112 without the first active material may be connected to the first electrode tab 113 that is separately formed, or a portion of the first non-coated part 112 may be stamped to form the first electrode tab 113. The first electrode 110 or the first electrode tab 113 may be connected to the accommodating can 300. The accommodating can 300 connected to the first electrode 110 may function as a negative electrode.

The second electrode 120 may include, on both surfaces of a second substrate formed of a circular thin metal plate, a second coating part 121 (refer to FIG. 12) coated with a second active material and a second non-coated part 122 (refer to FIG. 12) that exposes the substrate without the second active material. The second coating part 121 may be formed by applying a second active material such as transition metal oxide to a collector plate formed of a metal foil such as aluminum or aluminum alloy. The second non-coated part 122 without the second active material may be connected to the second electrode tab 123 that is separately formed, or a portion of the second non-coated part 122 may be stamped to form the second electrode tab 123. The second electrode 120 may be connected to the cap assembly 400. The cap assembly 400 connected to the second electrode 120 may function as a positive electrode.

The separator 130 may be disposed between the first electrode 110 and the second electrode 120. The separator 130 may insulate the first electrode 110 and the second electrode 120, and lithium ions may be exchanged between the first electrode 110 and the second electrode 120. The separator 130 may have a sufficient length to completely insulate between the first electrode 110 and the second electrode 120 even though the electrode assembly 100 contracts or expands during the charging and discharging process of the secondary battery 1.

The first electrode tab 113 is connected to the first electrode 110. The first electrode tab 113 may be connected to the first non-coated part 112 of the first electrode 110, or may be formed by stamping the first non-coated part 112. The first electrode tab 113 may have the same material as the metal substrate of the first electrode 110. The plurality of first electrode tabs 113 connected to respective first non-coated parts 112 may be formed in the same direction and placed to face one another. The plurality of first electrode tabs 113 may be connected to one another by welding. For example, the plurality of first electrode tabs 113 may be connected and integrated as one tab by welding. As another example, the plurality of first electrode tabs 113 may be connected to a lead tab to be bent and connected to the accommodating can 300 by welding.

The first electrode tab 113 connected to the first electrode 110 is electrically connected to the accommodating can 300. The first electrode tab 113 may function as a current path of the accommodating can 300 connected to the first electrode 110. For example, the first electrode tab 113 may be bent first to face the bottom of the accommodating can 300, and secondarily bent to be disposed between the lower surface of the electrode laminate 140 and the bottom of the accommodating can 300. The first electrode tab 113 may be disposed between the electrode laminate 140 and one inner side of the accommodating can 300. The first electrode tab 113 may be disposed between the lower surface of the electrode laminate 140 and the inner bottom surface of the accommodating can 300 to be closely connected to the accommodating can 300 by the pressure from the electrode laminate 140. In this case, without a separate bonding process such as welding, the first electrode tab 113 may be electrically connected to the inner bottom surface of the accommodating can 300 by the pressure from the electrode laminate 140.

The first contact member 210 may be placed between the first electrode tab 113 and the lower surface of the electrode laminate 140. The first electrode tab 113 may be disposed on the lower surface of the first contact member 210. The first electrode tab 113 may be disposed on the lower surface of the first contact member 210, and closely connected to the accommodating can 130 by the pressure applied by the first contact member 210. Without a separate bonding process such as welding, the first electrode tab 113 may be electrically connected to the inner bottom surface of the accommodating can 300 by the pressure applied by the first contact member 210.

The second electrode tab 123 is connected to the second electrode 120. The second electrode tab 123 may be connected to the second non-coated part 122 of the second electrode 120, and may be formed by stamping the second non-coated part 122. The second electrode tab 123 may include the same material as the metal substrate of the second electrode 120. The plurality of second electrode tabs 123 connected to the respective second non-coated parts 122 may be formed in the same direction and placed to face one another. The plurality of second electrode tabs 123 may be connected to one another by welding. For example, the plurality of second electrode tabs 123 may be connected by welding and integrated as one tab. For another example, the plurality of second electrode tabs 123 may be connected to a lead tab by welding to be bent and connected to the cap assembly 400.

The second electrode tab 123 connected to the second electrode 120 is electrically connected to the cap assembly 400. The first electrode tab 113 may function as a current path of the accommodating can 300 connected to the first electrode 110. For example, the second electrode tab 123 may be bent first to face one inner side surface of the cap assembly 400, and secondarily bent to be disposed between the upper surface of the electrode laminate 140 and one inner side surface of the cap assembly 400. The second electrode tab 123 may be connected to the cap assembly 400. The second electrode tab 123 may be disposed on the upper surface of the second contact member 220. The second electrode tab 123 may be placed between the electrode laminate 140 and one inner side surface of the cap assembly 400. The second electrode tab 123 may be placed between the electrode laminate 140 and one inner side surface of the cap assembly 400 and closely connected to the cap assembly 400 by the pressure from the electrode laminate 140. In this case, without a separate bonding process such as welding, the second electrode tab 123 may be electrically connected to one inner side surface of the cap assembly 400 by the pressure from the electrode laminate 140.

The second contact member 220 may be placed between the second electrode tab 123 and the upper surface of the electrode laminate 140. In this case, the second electrode tab 123 may be placed on the upper surface of the second contact member 220. The second electrode tab 123 may be placed on the upper surface of the second contact member 220 and closely connected to the cap assembly 400 by the pressure from the second contact member 220. Without a separate bonding process such as welding, the second electrode tab 123 may be electrically connected to one inner side surface of the cap assembly 400 by the pressure applied by the second contact member 220.

The secondary battery 1 may further include an insulating layer 124 disposed on one area of the second electrode 120 facing the first electrode 110 from one side of the second electrode 120. The separator 130 may be disposed between the first electrode 110 and the second electrode 120, but the area of the first electrode 110 may be greater than the area of the second electrode 120. Therefore, a short-circuit may occur between the first electrode 110 and the second electrode 120. For example, a short-circuit with the first electrode 110 may occur during the bending of the second electrode tab 123 extended and connected from one side of the second electrode 120. For the prevention of the short-circuit, the insulating layer 124 may be placed on the second non-coated part 122 of the second electrode 120 connected to the second electrode tab 123.

The first contact member 210 may be disposed between the electrode laminate 140 and the accommodating can 300. The first contact member 210 may be placed on the lower surface of the electrode laminate 140 with respect to the direction in which the electrode laminate 140 is stacked. During the process of bonding the accommodating can 300 with the cap assembly 400, the first contact member 210 may be compressed by the pressure from the electrode laminate 140 to allow the first electrode tab 113 to be closely attached to the accommodating can 300.

The first contact member 210 may include an insulator having elasticity. The first contact member 210 may be an elastic body compressed by the pressure from the electrode laminate 140. The first contact member 210 may be an insulator that prevents the short-circuit that may occur between the accommodating can 300 and other components than the first electrode 110 of the electrode assembly 100. The first contact member 210 may include an elastic insulator such as rubber, silicone, or polymer, but other materials are possible.

The first contact member 210 may include a porous material having elasticity. The first contact member 210 may be a porous material compressed to closely bond the first electrode tab 113 with the accommodating can 300 while containing an electrolyte. The first contact member 210 may be formed of a porous material having a sponge structure, a honeycomb structure, or various types of pores, but other structures are possible.

The second contact member 220 may be disposed between the electrode laminate 140 and the cap assembly 400. With respect to the direction in which the electrode laminate 140 is stacked, the second contact member 220 may be disposed on the upper surface of the electrode laminate 140. When the accommodating can 300 is bonded with the cap assembly 400, the second contact member 220 may be compressed by the pressure from the electrode laminate 140, thereby closely adhering the second electrode tab 123 to the cap assembly 400.

The second contact member 220 may include an insulator having elasticity. The second contact member 220 may be an elastic body compressed by the pressure from the electrode laminate 140. The second contact member 220 may be an insulator that prevents short-circuits between the cap assembly 400 and other components than the second electrode 120 of the electrode assembly 100. The second contact member 220 may include an insulator having elasticity such as rubber, silicone, or polymer, but other materials are possible.

The second contact member 220 may include a porous material having elasticity. The second contact member 220 may be a porous material compressed to closely adhere the second electrode tab 123 to the cap assembly 400 while containing an electrolyte. The second contact member 220 may be a porous material having a sponge structure, a honeycomb structure, or various types of pores, but other structures are possible.

The first fixing member 230 may be placed to surround the first electrode tab 113 between the inner wall of the accommodating can 300 and the outer circumferential surface of the electrode assembly 100. The first fixing member 230 may contact the first electrode tab 113 and the accommodating can 300.

The first fixing member 230 may be formed to correspond to the gap between the outer circumferential surface of the electrode assembly 100 where the first electrode tab 113 is placed and the inner wall of the accommodating can 300. Along the periphery of the electrode assembly 100, a width of a first surface 231 of the first fixing member 230 contacting the first electrode tab 113 may be greater than a width of a second surface 232 of the first fixing member 230 contacting the accommodating can 300 (e.g., the area of the second surface 232 contacting the accommodating can 300 may be less than the area of the first surface 231 covering the electrode tab 113). For the purpose of preventing the contact between the accommodating can 300 and other components of the electrode assembly 100 than the first electrode tab 113, along the periphery of the electrode assembly 100, the width of the first surface 231 of the first fixing member 230 contacting the first electrode tab 113 may be greater than a width of the first electrode tab 113. The first surface 231 of the first fixing member 230 having a greater width than the first electrode tab 113 may be attached to the outer circumferential surface of the electrode assembly 100 by surrounding the first electrode tab 113.

The first fixing member 230 may have elasticity and may be compressed after being attached to the outer circumferential surface of the electrode assembly 100. For example, the first fixing member 230 may be compressed and accommodated in the accommodating can 300 with the electrode assembly 100. The first fixing member 230, which is compressed and accommodated in the accommodating can, may provide the elasticity between the electrode assembly 100 and the accommodating can 300 to prevent the movement of the electrode assembly 100 in the accommodating can 300.

The first fixing member 230 may be an insulator that prevents the short-circuit between the outer circumferential surface of the electrode assembly 100 and the inner wall of the accommodating can 300. The first fixing member 230 may include at least one of polypropylene (PP), polyimide (PI), or polyethylene terephthalate (PET) as an insulating material, but may be a material (e.g., any material) capable of insulating between the electrode assembly 100 and the accommodating can 300.

The second fixing member 240 may be disposed to surround the second electrode tab 123 between the inner wall of the accommodating can 300 and the outer circumferential surface of the electrode assembly 100. The second fixing member 240 may contact the second electrode tab 123 and the accommodating can 300.

The second fixing member 240 may be formed to correspond to the gap between the outer circumferential surface of the electrode assembly 100 where the second electrode tab 123 is placed and the inner wall of the accommodating can 300. Along the periphery of the electrode assembly 100, a width of a first surface 241 of the second fixing member 240 contacting the second electrode tab 123 may be greater than a width of a second surface 242 of the second fixing member 240 contacting the accommodating can 300. For the purpose of preventing the contact between the accommodating can 300 and other components of the electrode assembly 100 than the second electrode tab 123, along the periphery of the electrode assembly 100, the width of the first surface 241 of the second fixing member 240 contacting the second electrode tab 123 may be greater than a width of the second electrode tab 123. The first surface 241 of the second fixing member 240 having a greater width than the second electrode tab 123 may be attached to the outer circumferential surface of the electrode assembly 100 by surrounding the second electrode tab 123.

The second fixing member 240 may have elasticity, and may be compressed after being attached to the outer circumferential surface of the electrode assembly 100. For example, the second fixing member 240 may be compressed and accommodated in the accommodating can 300 with the electrode assembly 100. The second fixing member 240, which is compressed and accommodated in the accommodating can, may provide the elasticity between the electrode assembly 100 and the accommodating can 300 to prevent the movement of the electrode assembly 100 in the accommodating can 300.

The second fixing member 240 may be an insulator that prevents the short-circuit between the outer circumferential surface of the electrode assembly 100 and the inner wall of the accommodating can 300. The second fixing member 240 may include at least one of polypropylene (PP), polyimide (PI), or polyethylene terephthalate (PET) as an insulating material, but may be a material (e.g., any material) capable of insulating between the electrode assembly 100 and the accommodating can 300.

The accommodating can 300 may have one side open to accommodate the electrode assembly 100 and may be electrically connected to the first electrode 110. The accommodating can 300 may be connected to the first electrode 110 through the first electrode tab 113 to function as a negative electrode.

The accommodating can 300 may form the entire exterior of the secondary battery 1. For example, the accommodating can 300 may have a cylindrical shape with one open side. The accommodating can 300 may include a circular bottom surface and a side wall that extends vertically from the circumference of the bottom surface. The diameter of the bottom surface of the accommodating can 300 may be greater than the height of the side wall, so that the secondary battery 1 may be formed as a button type or a coin type.

The upper surface of the accommodating can 300 may be open so that the accommodating space that accommodates the electrode assembly 100 may be exposed. After the electrode assembly 100 is accommodated in the accommodating can 300, the cap assembly 400 may cover one open side of the accommodating can 300 to seal the electrode assembly 100. Specifically, the upper surface of the side wall of the accommodating can 300 may be a step inwardly from the outside. The cap assembly 400 may be engaged and coupled with the step of the accommodating can 300 by metal bonding (e.g., welding, brazing, soldering, etc.), but may vary.

The cap assembly 400 seals one open side of the accommodating can 300. The cap assembly 400 may cover the one open side of the accommodating can 300 to seal the electrode assembly 100 from the outside. The cap assembly 400 may be electrically connected to the second electrode 120. The cap assembly 400 may be connected to the second electrode 120 through the second electrode tab 123 to function as a positive electrode.

The cap assembly 400 may include a terminal plate 410, a cap plate 420, and a cap insulating layer 430.

The terminal plate 410 may be connected to the second electrode 120. The terminal plate 410 may be disposed on the second contact member 220. The second electrode tab 123 may be disposed between the terminal plate 410 and the second contact member 220. The terminal plate 410 may be electrically connected to the second electrode 120 through the second electrode tab 123.

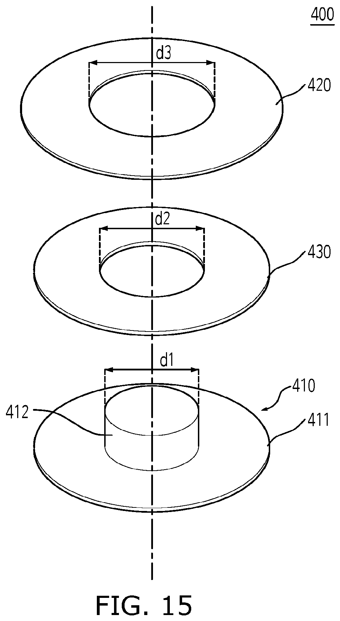

The cap insulating layer 430 and the cap plate 420 may be sequentially placed on the terminal plate 410. The terminal plate 410 may include a protrusion 412 (refer to FIG. 15) that protrudes upward from the center area. The protrusion 412 may protrude outwardly by penetrating a first opening of the cap plate 420 and a second opening of the cap insulating layer 430.

The cap plate 420 may be bonded to one open side of the accommodating can 300. The cap plate 420 may be mounted on the outer wall of the accommodating can 300 to be bonded to the accommodating can 300. The cap plate 420 may be placed on the cap insulating layer 430.

The cap plate 420 may include a first opening. The cap plate 420 may have a disk shape with the first opening at its center. The protrusion 412 of the terminal plate 410 may be connected to an external terminal by penetrating the first opening.

The cap insulating layer 430 may be placed on the terminal plate 410. The cap insulating layer 430 may be disposed between the terminal plate 410 and the cap plate 420 to insulate between the terminal plate 410 and the cap plate 420. The terminal plate 410 may be connected to the second electrode 120, and the cap plate 420 may contact the accommodating can 300 connected to the first electrode 110, so that the cap insulating layer 430 may be disposed between the terminal plate 410 and the cap plate 420 to insulate between the terminal plate 410 and the cap plate 420.

The cap insulating layer 430 may include a second opening. The cap insulating layer 430 may have a disk shape with the second opening at its center. The protrusion 412 of the terminal plate 410 may be connected to an external terminal by penetrating the second opening.

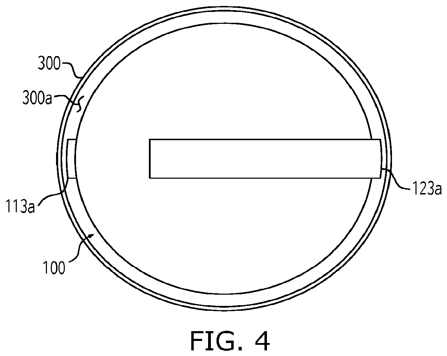

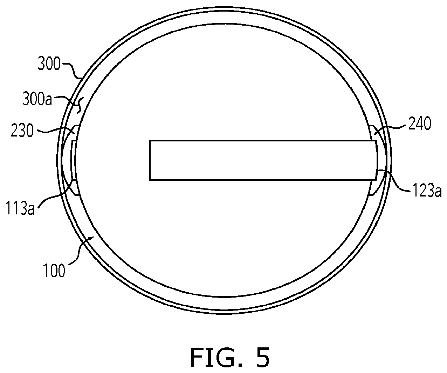

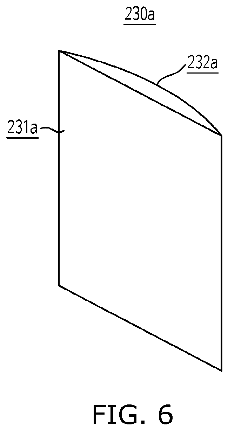

FIG. 4 is a view illustrating an electrode assembly accommodated in an accommodating can viewed from above as a comparative example. FIG. 5 is a view illustrating an electrode assembly accommodated in an accommodating can viewed from above according to embodiments of the present invention. FIG. 6 to FIG. 9 are views illustrating a first fixing member according to various embodiments of the present invention.

Referring to FIG. 4, as a comparative example, an electrode assembly 100 is accommodated on one open side of the accommodating can 300.

The electrode assembly 100 includes an electrode laminate where a plurality of first electrodes, a separator, and an electrode are alternately stacked, a first electrode tab 113a connected to one side of each of the plurality of first electrodes, and a second electrode tab 123a connected to one side of each of the plurality of second electrodes.

The first electrode tab 113a and the second electrode tab 123a may be formed of a thin metal plate, and bent with a predetermined gap from an outer circumferential surface of the electrode assembly 100 (or an outer circumferential surface of an electrode laminate). For example, the first electrode tab 113a may be bent first to face the bottom surface that is opposite to the one open side of the accommodating can 300 with a predetermined gap from the outer circumferential surface of the electrode assembly 100, and secondarily bent to be disposed on one surface of the electrode laminate facing the bottom surface of the accommodating can 300. The second electrode tab 123a may be bent first to face the one open side of the accommodating can 300 with a predetermined gap from the outer circumferential surface of the electrode assembly 100, and secondarily bent to be disposed on the other side of the electrode laminate that faces the one open side of the accommodating can 300.

A gap 300a may be formed between the outer circumferential surface of the electrode assembly 100 and the inner wall of the accommodating can 300 based on the bent structure of the first electrode tab 113a and the second electrode tab 123a.

Due to vibrations or external impacts such as drops of secondary batteries, the electrode assembly 100 may move in the gap 300a and may be damaged by the external impacts.

Referring to FIG. 5, a first fixing member 230 is disposed to surround the first electrode tab 113a on the outer circumferential surface of the electrode assembly 100. The first fixing member 230 may be disposed to pressurize the electrode tab 113, which is bent with a predetermined gap from the outer circumferential surface of the electrode assembly 100, to contact the outer circumferential surface of the electrode assembly 100. The second fixing member 240 is disposed to surround the second electrode tab 123a on the outer circumferential surface of the electrode assembly 100. The second fixing member 240 may be disposed to pressurize the second electrode tab 123a, which is bent with a predetermined gap from the outer circumferential surface of the electrode assembly 100, to contact the outer circumferential surface of the electrode assembly 100.

The first fixing member 230 and the second fixing member 240 may have elasticity and may be attached to the outer circumferential surface of the electrode assembly 100 to be pressurized. The first fixing member 230 and the second fixing member 240 may be pressurized and accommodated in the accommodating can 300 with the electrode assembly 100.

The first fixing member 230 and the second fixing member 240 each may be accommodated in the accommodating can 300, and the first surfaces 231 and 241 (refer to FIG. 2) may contact the electrode tabs 113 and 123, and the second surfaces 232 and 242 (refer to FIG. 2) that face the first surfaces may contact the accommodating can 300. The first fixing member 230 and the second fixing member 240 may provide the elasticity between the electrode assembly 100 and the accommodating can 300. The electrode assembly 100 may be fixed in the gap 300a without movement by the elasticity provided from the first fixing member 230 and the second fixing member 240.

Therefore, when the secondary battery experiences vibrations or external impacts such as drops, the electrode assembly 100 may not move to avoid damage. In addition, the first fixing member 230 and the second fixing member 240 may absorb the impacts transmitted to the electrode assembly 100 from the outside.

Referring to FIG. 6 to FIG. 9, first fixing members 230a, 230b, 230c, and 230d according to various embodiments of the present invention are disposed to surround a first electrode tab on the outer circumferential surface of an electrode assembly.

As shown in FIG. 6, the first fixing member 230a has an arc-shaped cross-section in the direction perpendicular to the stacking direction of the electrode laminate. A first surface 231a of the first fixing member 230a, which contacts the first electrode tab, may be flat, and a second surface 232a contacting the accommodating can is curved. For example, the first surface 231a of the first fixing member 230a may be coated with an adhesive and attached to the outer circumferential surface of the electrode assembly to surround the first electrode tab.

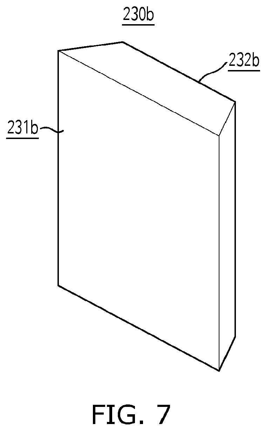

In another example, as shown in FIG. 7, the first fixing member 230b has a trapezoidal shaped cross-section in the direction perpendicular to the stacking direction of the electrode laminate. A first surface 231b contacting the first electrode tab and a second surface 232b contacting the accommodating can of the first fixing member 230b may be flat. For example, the first surface 231b of the first fixing member 230b may be coated with an adhesive and attached to the outer circumferential surface of the electrode assembly to surround the first electrode tab. The width of the first surface 231b may be greater than the width of the second surface 232b to be attached to the electrode assembly to sufficiently surround the first electrode tab.

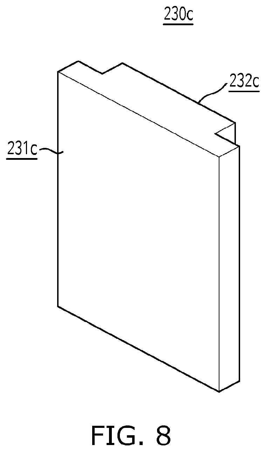

In yet another example, as shown in FIG. 8, a first fixing member 230c has a step shaped cross-section between a first surface 231c contacting the first electrode tab and a second surface 232c contacting the accommodating can in the direction perpendicular to the stacking direction of the electrode laminate. For example, the first fixing member 230c may be formed as a double-layered structure having a step, but other structures are possible.

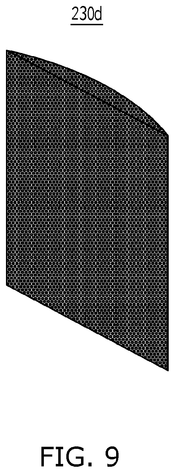

In still another example, as shown in FIG. 9, a first fixing member 230d includes a porous material having elasticity. The first fixing member 230d may be formed of a porous material that is pressurized to provide elasticity between the accommodating can 300 (refer to FIG. 5) and the electrode assembly 100 (refer to FIG. 5) while containing an electrolyte. The first fixing member 230d may be a porous material having a sponge structure, a honeycomb structure, or pores of various shapes, but other structures are possible.

The second fixing member according to embodiments of the present invention may be symmetrical to the first fixing members 230a, 230b, 230c, and 230d with substantially the same structure. Therefore, the detailed description of the second fixing member will be omitted.

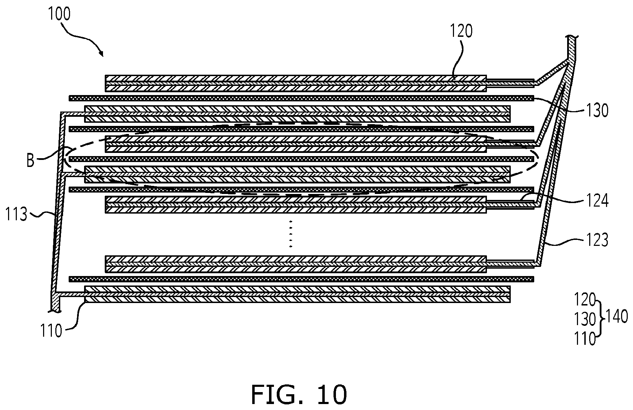

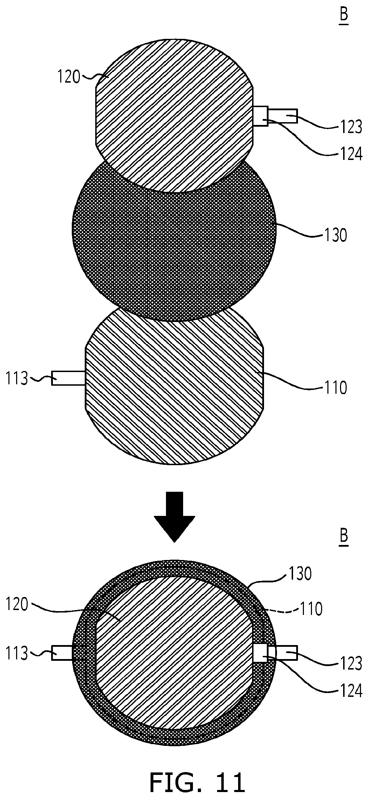

FIG. 10 is a view illustrating an example of an electrode assembly according to embodiments of the present invention, and FIG. 11 is an exploded view illustrating an electrode assembly in area B of FIG. 10 viewed from above.

Referring to FIG. 10 and FIG. 11, an electrode laminate 140 is formed by alternately stacking a plurality of first electrodes 110, a separator 130, and a second electrode 120.

The first electrode tab 113 is connected to one side of each of the plurality of first electrodes 110. For example, the first electrode tab 113 may be formed by connecting a strip-shaped metal substrate to each of a plurality of first non-coated parts 112 (see FIG. 12) of the plurality of stacked first electrodes 110. In another example, the first electrode tab 113 may be formed by stamping each of the plurality of non-coated parts 112 in a strip shape. The first electrode tab 113 may have the same material as the metal substrate of the first electrode 110.

The plurality of first electrode tabs 113 respectively connected to the first non-coated parts 112 may be formed to face one another in the same direction. The plurality of first electrodes 110 may be connected to one another by welding. For example, the plurality of first electrode tabs 113 may formed as a single tab by welding. As another example, the plurality of first electrode tabs 113 may be connected to a first lead tab by welding to be bent and connected to the accommodating can 300 (refer to FIG. 3).

The second electrode tab 123 may be connected to one side of each of the plurality of second electrodes 120. The second electrode tab 123 may be connected to the second electrode 120 in the direction opposite the direction in which the first electrode tab 113 is formed. For example, the second electrode tab 123 may be formed by connecting a strip-shaped metal substrate to each of the second non-coated parts 122 (see FIG. 12) of the plurality of stacked second electrodes 120. In another example, the second electrode tab 123 may be formed by stamping each of the second non-coated parts 122 in a strip shape. The second electrode tab 123 may have the same material as the metal substrate of the second electrode 120.

The plurality of second electrode tabs 123 respectively connected to the second non-coated parts 122 may face one another in the same direction. The plurality of second electrode tabs 123 may be connected to one another by welding. For example, the plurality of second electrode tabs 123 may be connected by welding and formed as a single tab. As another example, the plurality of second electrode tabs 123 may be connected to a second lead tab by welding to be bent and connected to the cap assembly 400 (refer to FIG. 3).

According to embodiments, the first electrode 110, the separator 130, and the second electrode 120 may be formed in a circular shape to correspond to the accommodating gap of the accommodating can 300. The first electrode 110 may function as a negative electrode, and the second electrode 120 may function as a positive electrode, and the area of the first electrode 110 may be greater than the area of the second electrode 120. For example, the length of the radius of the second electrode 120 may be smaller than the length of the radius of the first electrode 110. In other embodiments, the length of the radius of the second electrode 120 may be greater than the length of the radius of the first electrode 110. The area of the separator 130 disposed between the first electrode 110 and the second electrode 120 may be greater than the areas of (e.g., either of the area of) the first electrode 110 and the second electrode 120 to prevent short-circuits between the first electrode 110 and the second electrode 120.

According to embodiments, the separator 130 may be disposed between the first electrode 110 and the second electrode 120, but the area of the first electrode 110 may be greater than the area of the second electrode 120 to cause (e.g., which may cause) the short-circuit between the first electrode 110 and the second electrode 120. Therefore, the insulating layer 124 may be placed in one area of the second electrode 120 that faces the first electrode 110 to prevent the short-circuit.

FIG. 12 is a view illustrating an example of a first electrode plate and a second electrode plate according to embodiments of the present invention.

Referring to FIG. 12, according to embodiments of the present invention, the first electrode 110 includes a first coating part 111 and a first non-coated part 112. The first coating part 111 may be coated with a first active material on the inner side with respect to a predetermined arc 150 on the outer circumference of a circular substrate. The first non-coated part 112 may not be coated with the first active material on the outer side with respect to the predetermined arc 150 on the outer circumference of the circular substrate.

The second electrode 120 includes a second coating part 121 and a second non-coated part 122. The second coating part 121 may be coated with the second active material on the inner side with respect to the predetermined arc 150 on the outer circumference of the circular substrate. The second non-coated part 122 may not be coated with the second active material on the outer side with respect to the predetermined arc 150 on the outer circumference of the circular substrate.

According to embodiments, the predetermined arc 150 on the circular substrate of the first electrode 110 and the second electrode 120 may be set to have an angle(6) ranging from 30° to 60° between the center of the circular substrate and both ends of the predetermined arc 150. The angle may allow the first electrode tab 113 and the second electrode tab 123 to be formed in opposite directions, but the first electrode tab 113 and the second electrode tab 123 to be stably and respectively connected to the first non-coated part 112 and the second non-coated part 122 by welding to be sufficiently coated with an active material. The above-described range of angle is merely exemplary, but other angle ranges are possible.

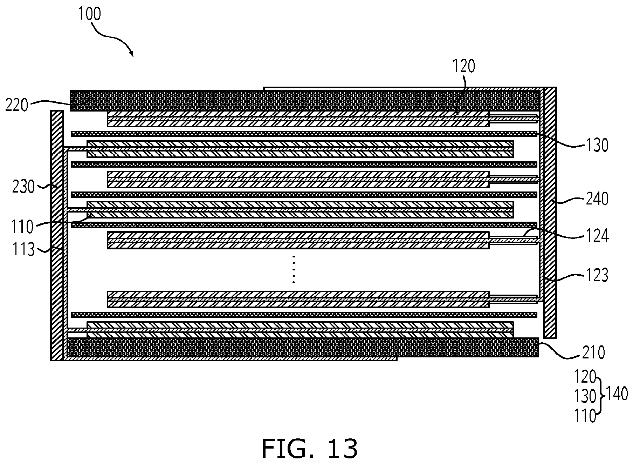

FIG. 13 is a view illustrating that a first contact member, a second contact member, a first fixing member and a second fixing member are placed on an electrode assembly.

Referring to FIG. 13, according to embodiments of the present invention, based on the stacking direction of the electrode laminate 140, the first contact member 210 is placed on the lower surface of the electrode laminate 140. The first electrode tab 113 may be bent to be placed on the lower surface of the first contact member 210. The first contact member 210 may be placed between the first electrode tab 113 that is bent and the lower surface of the electrode laminate 140.

Based on the stacking direction of the electrode laminate 140, the second contact member 220 may be placed on the upper surface of the electrode laminate 140. The second electrode tab 123 may be bent to be placed on the upper surface of the second contact member 220. The second contact member 220 may be placed between the second electrode tab 123 that is bent and the upper surface of the electrode laminate 140.

The first fixing member 230 may be placed to surround the first electrode tab 113 on the outer circumferential surface of the electrode assembly 100. The first fixing member 230 may be disposed to pressurize the first electrode tab 113, which is bent with a predetermined gap from the outer circumferential surface of the electrode assembly 100, to contact the outer circumferential surface of the electrode assembly 100.

The second fixing member 240 may be placed to surround the second electrode tab 123 on the outer circumferential surface of the electrode assembly 100. The second fixing member 240 may be disposed to pressurize the second electrode tab 123, which is bent with a predetermined gap from the outer circumferential surface of the electrode assembly 100, to contact the outer circumferential surface of the electrode assembly 100.

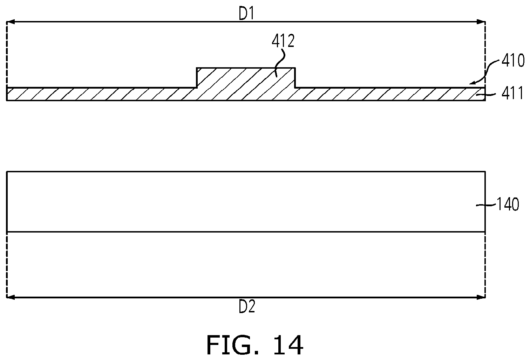

FIG. 14 is a cross-sectional view illustrating a terminal plate according to embodiments of the present invention.

Referring to FIG. 14, a terminal plate 410 includes a body 411 connected to the second electrode 120 and a protrusion 412 that protrudes upward from the center of the body 411.

The body 411 may have a shape corresponding to one surface of the electrode laminate 140 that faces the body 411. A diameter D1 of the body 411 may be equal to or greater than a diameter D2 of the electrode laminate 140.

When the accommodating can 300 is bonded to the cap assembly 400, the diameter D1 of the body 411 may be equal to or greater than the diameter D2 of the electrode laminate 140 so that the cap assembly 400 may apply pressure downward to sufficiently pressurize the first contact member 210 and the second contact member 220.

FIG. 15 is an exploded perspective view illustrating a cap assembly according to embodiments of the present invention.

Referring to FIG. 15, the protrusion 412 of the terminal plate 410 protrudes upward from the center of the body 411. The protrusion 412 penetrates a first opening of the cap plate 420.

A diameter d1 of the protrusion 412 of the terminal plate 410 is smaller than an inner diameter d3 of the first opening of the cap plate 420 and an inner diameter d2 of the second opening of the cap insulating layer 430. The diameter d1 of the protrusion 412 of the terminal plate 410 may be smaller than the inner diameter d3 of the first opening and the inner diameter d2 of the second opening so that the protrusion 412 may penetrate the first opening and the second opening to be connected to an external terminal.

The inner diameter d2 of the second opening of the cap insulating layer 430 may be smaller than the inner diameter d3 of the first opening of the cap plate 420. Therefore, the protrusion 412 of the terminal plate 410 may be prevented from contacting the first opening of the cap plate 420.

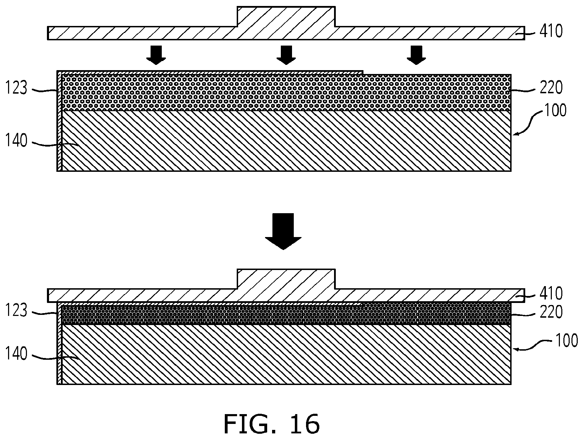

FIG. 16 is a view illustrating a connection relationship between a cap assembly and an electrode assembly.

Referring to FIG. 16, a second contact member 220 is disposed on the top of the electrode laminate 140. The second electrode tab 123 may be bent to be disposed on the second contact member 220. The cap assembly 400 may seal the accommodating can 300, so that the terminal plate 410 may be placed on (e.g., over) the second contact member 220. The second electrode tab 123 is placed between the second contact member 220 and the terminal plate 410. The terminal plate 410 is electrically connected to the second electrode 120 through the second electrode tab 123 without a separate process such as welding.

During the process of sealing the accommodating can 300, the cap assembly 400 may pressurize the second contact member 220 and the electrode laminate 140. The second contact member 220 may be compressed between the cap assembly 400 and the electrode laminate 140 by the transmitted pressure. When the second contact member 220 is compressed, the second electrode tab 123 may be closely adhered to one inner side surface of the cap assembly 400.

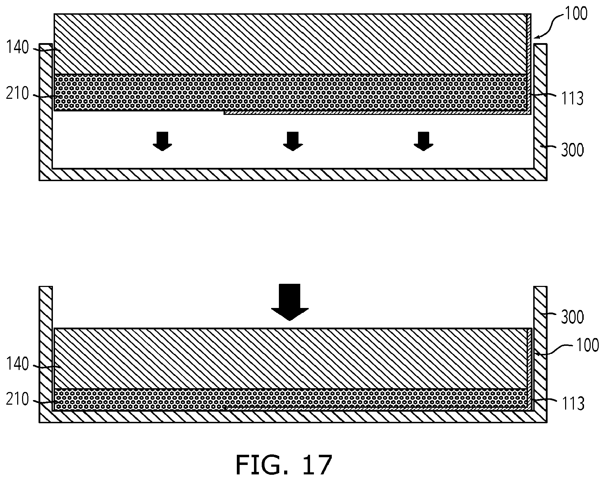

FIG. 17 is a view illustrating a connection relationship between an electrode assembly and an accommodating can according to embodiments of the present invention.

Referring to FIG. 17, according to embodiments, the first contact member 210 is placed under the electrode laminate 140. The first electrode tab 113 is bent and placed under the first contact member 210. When the electrode assembly 100 is accommodated in the accommodating can 300, the first electrode tab 113 is placed between the first contact member 210 and the accommodating can 300. Without a separate process such as welding, the accommodating can 300 may be electrically connected to the first electrode 110 through the first electrode tab 113.

During the process of sealing the accommodating can 300, the cap assembly 400 may apply a pressure to the first contact member 210 and the electrode laminate 140. The first contact member 210 may be compressed between the electrode laminate 140 and the accommodating can 300 by the transmitted pressure. When the contact member 210 is compressed, the first electrode tab 113 may be closely adhered to one inner side surface of the accommodating can 300.

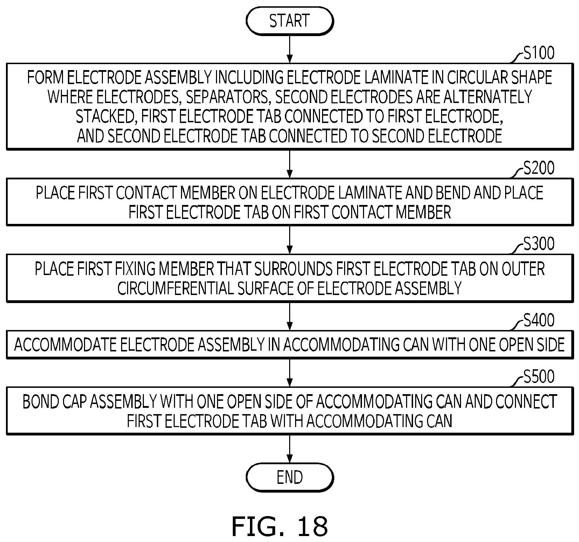

FIG. 18 is a flowchart illustrated to explain a manufacturing method of a secondary battery according to embodiments of the present invention.

Referring to FIG. 18, a manufacturing method of a secondary battery according to embodiments includes forming an electrode assembly including an electrode laminate where a first electrode, a separator, and a second electrode are alternately stacked, a first electrode tab connected to a first electrode, and a second electrode tab connected to a second electrode in step S100, arranging (e.g., placing) a first contact member on the electrode laminate and bending and placing a first electrode tab on the first contact member in step S200, arranging (e.g., placing) a first fixing member that surrounds the first electrode tab on the outer circumferential surface of the electrode assembly in step s300, accommodating the electrode assembly in an accommodating can with one open side in step S400, and bonding the cap assembly to the one open side of the accommodating can to connect the first electrode tab with the accommodating can in step S500. Referring to FIG. 1 to FIG. 3, step S100 to step S500 will be described in detail below.

In step S100, an electrode assembly 100 may be formed including an electrode laminate 140 where a plurality of first electrodes 110, a separator 130, and a second electrode 120 are alternately stacked, a first electrode tab 113 connected to a first electrode 110, a second electrode tab 123 connected to the second electrode 120. The first electrode 110 may include a first coating part coated with a first active material on the inside with respect to a predetermined arc 150 (refer to FIG. 12) on the outer circumference of the circular substrate and a non-coated part without a first active material on the outer side with respect to the predetermined arc 150. The second electrode 120 may include a second coating part coated with a second active material on the inside with respect to the predetermined arc 150 on the outer circumference of the circular substrate and a second non-coated part without the second active material on the outer side with respect to the predetermined arc 150.

In step S200, the first contact member 210 may be placed on the electrode laminate 140. The first electrode tab 113 may be bent and arranged on (e.g., from below in the orientation of FIG. 3) the first contact member 210. Additionally, the second contact member 220 may be arranged on the other side of the electrode laminate 140 where the first contact member 210 is placed. The second electrode tab 123 may be bent and arranged on the second contact member 220.

In step S300, a first fixing member 230 that surrounds the first electrode tab 113 may be placed on the outer circumferential surface of the electrode assembly 100. The first fixing member 230 may be placed to pressurize the first electrode tab 113, which is bent with a predetermined gap from the outer circumferential surface of the electrode assembly 100, to contact the outer circumferential surface of the electrode assembly 100.

Additionally, a second fixing member 240 that surrounds a second electrode tab 123 may be placed on the outer circumferential surface of the electrode assembly. The second fixing member 240 may be placed to pressurize the second electrode tab 123, which is bent with a predetermined gap from the outer circumferential surface of the electrode assembly 100, to contact the outer circumferential surface of the electrode assembly 100.

In step S400, the electrode assembly 100 may be accommodated in the accommodating can 300 with one open side. The first electrode tab 113 may be placed between the electrode assembly 100 and the inner one side of the accommodating can 300. The accommodating can 300 may be connected to the first electrode tab 113. The accommodating can 300 may be connected to the first electrode 110 through the first electrode tab 113 to function as a negative electrode.

The first fixing member 230 and the second fixing member 240 may be pressurized and accommodated in the accommodating can 300 with the electrode assembly 100. Each of the first fixing member 230 and the second fixing member 240 may be accommodated in the accommodating can 300, a first surface may contact the first electrode tabs 113 and 123, and a second surface opposite to the first surface may contact the accommodating can 300. The first fixing member 230 and the second fixing member 240 may provide an elasticity between the electrode assembly 100 and the accommodating can 300. Due to the elasticity provided from the first fixing member 230 and the second fixing member 240, the electrode assembly 100 may be fixed without moving within the gap distanced from the accommodating can 300.

In step S500, the one open side of the accommodating can 300 may be sealed by the cap assembly 400 to connect the second electrode tab 123 to the cap assembly 400. The cap assembly 400 may be connected to the second electrode 120 through the second electrode tab 123 to function as a positive electrode.

The first contact member 210 may be pressurized by the pressure transmitted from the electrode laminate 140 to closely adhere the first electrode tab 113 to the accommodating can 300. The second contact member 220 may be pressurized by the pressure transmitted from the electrode laminate 140, thereby closely adhering the second electrode tab 123 to the cap assembly 400.

The secondary battery 1 manufactured by the manufacturing method described above may prevent the damage to the internal components of secondary batteries caused by external impacts such as vibration, dropping, etc. because the contact members 210 and 220 and the fixing members 230 and 240 are placed on the electrode assembly 100.

When a winding-type electrode assembly is used in a coin-type or button-type battery, deformation or crack occurs due to electrode expansion, thereby limiting the capacity. For solving the problems of the winding-type electrode assembly, a stack-type electrode assembly for controlling the continuity of expansion may be used by using an array of discontinuous electrodes. However, in the case of the stack-type electrode assembly, the gap between the accommodating can and the electrode assembly is greater than that of the winding-type electrode assembly. When external impacts occur such as vibrations, drops, etc. an electrode assembly may be displaced within a gap, which increases the risk of damage.

According to embodiments of the present invention, a fixing member that surrounds an electrode tab on an outer circumferential surface of an electrode assembly is placed, and the fixing member provides elasticity between an accommodating can and the electrode assembly, thereby preventing the movement of the electrode assembly within the accommodating can.

According to embodiments of the present invention, a contact member having the elasticity is placed between the electrode assembly and the accommodating can and/or the electrode assembly and the cap assembly, thereby connecting the electrode tabs, the accommodating can, and the cap assembly without a separate welding.

According to embodiments of the present invention, in the manufacturing process of an electrode assembly of a circular stack type, a circular-shaped electrode plate structure is provided to stably connect electrode tabs and increase coating areas of an active material.

According to embodiments of the present invention, a fixing member and/or an contact member is placed in the electrode assembly to avoid the damage to internal components of secondary batteries due to external impacts such as vibrations, drops, etc. of secondary batteries.

Although the present invention has been described above with respect to embodiments thereof, the present invention is not limited thereto. Various modifications and variations can be made thereto by those skilled in the art within the spirit of the present invention and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

### [Description of Notations]

1: Secondary Battery
100: Electrode Assembly
110: First Electrode
113: First Electrode Tab
120: Second Electrode
123: Second Electrode Tab
124: Insulating Layer
130: Separator
140: Electrode Laminate
210: First Contact member
220: Second Contact member
230: First Fixing Member
240: Second Fixing Member
300: Accommodating Can
400: Cap Assembly
410: Terminal Plate
420: Cap Plate
430: Cap Insulating Layer

## Claims

1. A secondary battery (1), comprising:
an electrode assembly (100) including an electrode laminate (140) having a circular shape where a first electrode (110), a separator (130), and a second electrode (120) are alternately stacked, a first electrode tab (113) connected to the first electrode (110), and a second electrode tab (123) connected to the second electrode (120);
an accommodating can (300) with one open side for accommodating the electrode assembly (100), the accommodating can (300) being electrically connected to the first electrode tab (113);
a cap assembly (400) configured to seal the one open side of the accommodating can (300), the cap assembly (400) being electrically connected to the second electrode tab (123);
a first contact member (210) between one surface of the electrode laminate (140) that faces a bottom surface of the accommodating can (300) and the first electrode tab (113); and
a first fixing member (230) surrounding the first electrode tab (113) between an inner side wall of the accommodating can (300) and an outer circumferential surface of the electrode assembly (100).

2. The secondary battery (1) as claimed in claim 1, wherein the first fixing member (230) comprises:
a first surface (231) contacting the first electrode tab (113); and
a second surface (232) contacting the accommodating can (300),
wherein a width of the first surface (231) is greater than a width of the second surface (232) along a circumference of the electrode assembly (100).

3. The secondary battery (1) as claimed in claim 1 or 2, wherein a cross-section of the first fixing member (230) perpendicular to a stacking direction of the electrode laminate (140) has an arc shape, a trapezoidal shape, or a step shape between the first surface and the second surface.

4. The secondary battery (1) as claimed in any of the preceding claims, wherein the first fixing member (230) is bonded to the first electrode tab (113) by an adhesive coated on the first surface.

5. The secondary battery (1) as claimed in any of the preceding claims, further comprising a second fixing member (240) surrounding the second electrode tab (123) between the inner side wall of the accommodating can (300) and the outer circumferential surface of the electrode assembly (100).

6. The secondary battery (1) as claimed in claim 5, wherein the second fixing member (240) comprises:
a first surface (241) contacting the second electrode tab (123); and
a second surface (242) contacting the accommodating can (300),
wherein a width of the first surface (241) is greater than a width of the second surface (242) along a circumference of the electrode assembly (100).

7. The secondary battery (1) as claimed in claim 6, wherein a cross-section of the second fixing member (240) perpendicular to a stacking direction of the electrode laminate (140) has an arc shape, a trapezoidal shape, or a step shape between the first surface and the second surface.

8. The secondary battery (1) as claimed in any of the preceding claims 5 to 7, wherein at least one of the first fixing member (230) and the second fixing member (240) comprises an insulating material including at least one of Polypropylene, Polyimide, and Polyethylene terephthalate.

9. The secondary battery (1) as claimed in any of the preceding claims, wherein at least one of the first fixing member (230) and the second fixing member (240) includes a porous insulating material.

10. The secondary battery (1) as claimed in any of the preceding claims, wherein the first electrode (110) comprises a first coating part (111) on an inner side of a predetermined first arc on an outer circumference of a circular substrate, the first coating part (111) being coated with a first active material, and a first non-coated part (112) on an outer side of the predetermined first arc not coated with the first active material, and
wherein the second electrode (120) comprises a second coating part (121) on an inner side of a predetermined second arc on an outer circumference of a circular substrate, the second coating part (121) being coated with a second active material, and a second non-coated part (122) on an outer side of the predetermined second arc not coated with the second active material.

11. The secondary battery (1) as claimed in any of the preceding claims, wherein the first electrode tab (113) is adhered to a bottom surface of the accommodating can (300) by a pressure from the electrode laminate (140) in response to the cap assembly (400) being coupled to the accommodating can (300).

12. The secondary battery (1) as claimed in any of the preceding claims, further comprising a second contact member (220) between another surface of the electrode laminate (140) facing the second electrode tab (123) and a bottom surface of the cap assembly (400).

13. The secondary battery (1) as claimed in claim 12, wherein the second electrode tab (123) is adhered to the bottom surface of the cap assembly (400) by a pressure from the electrode laminate (140) in response to the cap assembly (400) being coupled to the accommodating can (300).

14. The secondary battery (1) as claimed in any of the preceding claims, wherein the cap assembly (400) comprises:
a terminal plate (410) connected to the second electrode tab (123);
a cap plate (420) including a first opening, the cap plate (420) being coupled to the one open side of the accommodating can (300); and
a cap insulating layer (430) including a second opening, the cap insulating layer (430) being between the terminal plate (410) and the cap plate (420) for insulation.

15. The secondary battery (1) as claimed in claim 14, wherein the terminal plate (410) comprises:
a body (411) connected to the second electrode tab (123); and
a protrusion (412) protruding upward from a center of the body (411), the protrusion (412) penetrating the first opening and the second opening,
wherein a diameter of the body (411) is greater than a diameter of an outer circumferential surface of the electrode laminate (140).
